# FASCICULE DE BREVET EUROPEEN

(11) **EP 0 913 271 B1**
(45) Date de publication et mention de la délivrance du brevet: **08.01.2003**
(21) Numéro de dépôt: 98402542.9
(22) Date de dépôt: 14.10.1998
(51) Int. Cl.: B44C 1/17, D06Q 1/14, B41M 5/035

(54) **Procédé automatique d'impression en continu de motifs multicolores sur un film flocké thermocollant ou soudable par haute fréquence, film obtenu par ce procédé, procédé d'application de ce film sur un support à décorer et support décoré obtenu par ce procédé**
Kontinuierliches automatisches Verfahren zum Drucken von mehrfarbigen Mustern auf eine hochfrequenzverschweissbare oder thermoklebende beflockte Folie, durch das Verfahren hergestellte Folie, Verfahren zum Aufbringen der Folie auf einen Gegenstand, und durch das Verfahren hergestellter dekorierter Gegenstand
Continuous automatic process for printing multicoloured designs on a flocked film which is fusible or weldable by high-frequency radiation, film obtained by the said process,process for applying the said film to an object, and decorated object obtained by the said process

(30) Priorité: 15.10.1997 FR 9712921
(43) Date de publication de la demande: 06.05.1999
(73) Titulaire: Société d'Enduction et de Flockage, 53000 Laval (FR)
(72) Inventeur: Lion, Jean-Pierre, 53000 Laval (FR)
(74) Mandataire: Abello, Michel

(56) Documents cités:
- EP-A- 0 581 614
- FR-A- 2 343 609
- GB-A- 2 066 158
- US-A- 4 294 577
- US-A- 4 741 791
- US-A- 5 597 637
- US-A- 5 665 458

## Description

La présente invention concerne un procédé automatique d'impression en continu de motifs multicolores sur un film flocké thermocollant ou soudable par haute fréquence, le film obtenu par ce procédé, ainsi qu'un procédé d'application de ce film sur un support à décorer, tel qu'un tissu, et le support décoré obtenu par ce procédé.

L'impression par transfert-sublimation est déjà connue en tant que telle et consiste, dans un premier temps, à imprimer sur un papier-support des motifs à partir d'encres constituées de colorants sublimables qui sont aptes à se vaporiser à partir d'une certaine température et à venir se fixer de façon permanente sur des fibres synthétiques, le procédé d'impression du papier-support pouvant être quelconque, par exemple une impression offset, une impression hélio, une flexographie ou une sérigraphie à cadre plat ou rotatif. Puis, dans un deuxième temps, les motifs en colorants sublimables préalablement imprimés sur le papier-support sont transférés par mise en contact, sous une pression et une température prédéterminées, du papier pré-imprimé avec le support textile à décorer.

Ce procédé d'impression par transfert-sublimation est utilisé de façon courante pour imprimer des textiles synthétiques ainsi que la surface de textiles flockés destinés en particulier à l'ameublement et à l'automobile.

Toutefois, cette méthode d'impression n'a encore jamais été utilisée pour imprimer des films flockés thermocollants ou soudables par haute fréquence, car la sensibilité thermique de ces films rend difficile l'impression par transfert thermique qui doit s'effectuer à une température au moins égale à 180°C, température que ces films ne peuvent pas eux-mêmes supporter.

En outre, les films thermocollants ou soudables par haute-fréquence sont généralement flockés de fibres de rayonne à base de viscose, lesquelles fibres ne peuvent être imprimées dans de bonnes conditions par le procédé actuel de transfert-sublimation.

Les films flockés thermocollants ou soudables par haute fréquence sont utilisés de façon courante pour la décoration de vêtements, d'articles textiles, d'accessoires et généralement de tous supports susceptibles de supporter une application thermique ou une soudure par haute fréquence.

Ces films thermo-collants ou soudables par haute fréquence sont généralement flockés de fibres de floc teintées avant flockage, ce qui conduit à des surfaces unies dans lesquelles sont découpés les motifs, par exemple des chiffres, lettres, ou logos, que l'on souhaite appliquer sur le support à décorer.

Pour imprimer des motifs multicolores sur un film flocké thermo-collant ou soudable par haute fréquence, on procède habituellement à l'impression sérigraphique d'un film flocké de couleur blanche. Les fibres, ou flocks, qui sont utilisées sont généralement en rayonne à base de viscose. Le film flocké thermocollant ou soudable par haute fréquence ainsi imprimé avec des motifs multicolores est généralement prédécoupé avant son application thermique, dans le cas d'un film thermocollant, et découpé lors de son application sur le support à décorer dans le cas de la soudure haute-fréquence.

Ce procédé d'impression sérigraphique présente toutefois comme inconvénients, une faible résistance au lavage des coloris qui s'affadissent au cours des lavages successifs du support ainsi décoré, ainsi qu'une faible résistance à l'abrasion des fibres flockées en rayonne à base de viscose principalement à l'état humide. En outre, l'impression sérigraphique nécessite de déposer des quantités d'encre importantes pour recouvrir la couche de fibres flockées, ce qui conduit à utiliser des cadres sérigraphiques ouverts, limitant ainsi les possibilités graphiques et rendant par exemple impossible l'impression en quadrichromie de type photographique.

Pour obtenir un film flocké à motifs multicolores soudable par haute-fréquence, on connaît également un autre procédé qui consiste à flocker sequentiellement des fibres de floc préteintées de couleurs différentes sur un film soudable par haute fréquence à travers des écrans distincts correspondant chacun à l'emplacement prévu pour chaque couleur différente dans le motif multicolore à imprimer sur le film. Toutefois, ce procédé nécessite l'utilisation d'autant de cadres sérigraphiques que de couleurs et de motifs différents à imprimer, ce qui rend ce procédé lent et délicat, donc onéreux à mettre en oeuvre.

Un autre procédé de fabrication de motifs décoratifs obtenus par flocage, dont la décoration est obtenue par transfer à chaud et la fixation sur un tissu par thermocollage, est décrit dans la publication du brevet FR-A-2 343 609.

L'invention a pour but d'éliminer les inconvénients précités et de proposer un nouveau procédé automatique d'impression en continu de motifs multicolores sur un film flocké thermocollant ou soudable par haute fréquence, permettant de reproduire les effets graphiques les plus fins, y compris des impressions en quadrichromie de type photographique, tout en présentant d'excellentes propriétés de tenue au lavage des motifs imprimés et de résistance à l'abrasion des fibres flockées.

A cet effet, l'invention a pour objet un procédé automatique d'impression en continu de motifs multicolores sur un film flocké thermocollant ou soudable par haute fréquence, caractérisé par le fait qu'il consiste à :
- appliquer un film thermocollant ou soudable par haute fréquence sur un papier protecteur pelable,
- appliquer une couche adhésive sur ledit film,
- flocker des fibres ou flocks de couleur blanche sur la couche adhésive,
- préparer un papier pré-imprimé de motifs multicolores constitués de colorants sublimables aptes à se vaporiser et à se fixer de façon permanente sur les fibres précitées, ces motifs pré-imprimés étant exactement l'image à l'envers des motifs que l'on souhaite obtenir sur le film flocké,
- transférer par sublimation les motifs multicolores du papier pré-imprimé sur le stratifié constitué du papier protecteur et du film flocké par contact sous une pression et une température déterminées. La présence de ce papier protecteur pelable permet d'imprimer en continu un film flocké thermo-collant ou soudable par haute fréquence, sans altérer l'intégrité et la cohésion de ce film.

Dans un premier mode de réalisation, la papier protecteur pelable est enduit ou recouvert par co-extrusion d'un film de polymères de synthèse soudables par haute fréquence, de préférence des résines de polychlorure de vinyle, compactes ou moussées par addition d'agents gonflants chimiques ou mécaniques.

Selon un deuxième mode de réalisation, le papier protecteur pelable est enduit ou recouvert par co-extrusion d'un film de résines de synthèse thermo-collantes, de préférence des résines thermo-fusibles à base de co-polyamides, de co-polyesters, d'esters acryliques, de latex de synthèse, ou d'ethylène vinyl acétate (EVA).

Avantageusement, les fibres utilisées pour le flockage sont des fibres synthétiques, de préférence des fibres de polyamide, telles que des fibres de Nylon 6 ou 6-6 (marque déposée au nom de Dupont de Nemours), ou des fibres de polyester. Par exemple, les fibres utilisées sont des fibres de 0,5mm (0,9 DTEX) à 2mm (6 DTEX).

Ces fibres peuvent également être des fibres : soit naturelles, soit en rayonne à base de viscose, soit en coton, préalablement traitées pour retenir les colorants sublimés.

Selon encore une autre caractéristique, l'étape de transfert s'effectue au moyen d'une calandre d'impression thermique assurant une pression régulière généralement inférieure à 40kPa, entre le papier pré-imprimé et le stratifié, à une température comprise entre environ 180 et 230 ° C et pendant une durée approximative de 5 à 30 s.

Avantageusement, le papier pré-imprimé est obtenu par dépôt sur ce papier de colorants sublimables au moyen d'une imprimante à jet d'encre pilotée par ordinateur.

L'invention vise également un film flocké thermocollant ou soudable par haute fréquence, directement obtenu par le procédé tel que décrit plus haut, caractérisé par le fait qu'il comporte un papier protecteur pelable sur lequel est appliqué un film thermocollant ou soudable par haute-fréquence, ledit film étant revêtu d'une couche adhésive à laquelle adhèrent des fibres ou flocks imprimés de motifs multicolores.

L'invention a également pour objet un procédé d'application du film flocké précité sur un support à décorer, tel qu'un tissu ou un autre support tel qu'un papier, un carton, un non-tissé ou un film plastique, caractérisé en ce qu'il consiste à repérer sur le film le(s) motif(s) imprimé(s) préselectionné(s) à appliquer sur le support à décorer, à découper le film le long du contour des motifs ainsi repérés, et à peler le papier protecteur pelable avant d'appliquer par thermocollage ou soudure par haute fréquence la portion préselectionnée du film ainsi découpée et pelée sur le support à décorer.

Dans une variante, le procédé consiste avant l'étape de repérage, à appliquer un support provisoire légèrement autoadhésif et résistant à haute température sur les flocks du film flocké, puis à découper le film à partir de sa surface non flockée de manière à ne pas découper le support autoadhésif, ensuite à décoller du support autoadhésif la partie découpée du film flocké qui ne correspond pas au(x) motif(s) préselectionné(s), à appliquer indirectement les portions préselectionnées découpées et pelées sur le support à décorer par l'intermédiaire du support autoadhésif et, enfin, à décoller le support provisoire des portions de film ainsi appliquées après thermocollage ou soudure par haute fréquence de celles-ci sur le support à décorer.

Avantageusement, dans le cas de la soudure par haute fréquence, le procédé consiste à peler le papier protecteur pelable du film flocké, à repérer sur le film les motifs préselectionnés à appliquer et à effectuer simultanément avec la même électrode les opérations de découpe et de soudure par haute-fréquence de la portion ainsi repérée du film flocké sur le support à décorer, avec éventuellement une couche de mousse qui peut être interposée entre le film et le support à décorer.

L'invention vise également le support décoré tel qu'un tissu, directement obtenu par le procédé tel que décrit plus haut, caractérisé par le fait qu'il comporte un support sur lequel est thermocollée ou soudée la portion de film thermocollant ou soudable par haute fréquence des motifs imprimés présélectionnés et découpés.

L'invention sera mieux comprise et d'autres buts, détails, avantages et caractéristiques de celle-ci apparaîtront plus clairement au cours de la description explicative détaillée qui va suivre d'un mode de réalisation particulier, actuellement préféré de l'invention, donné uniquement à titre illustratif et non limitatif, en référence aux dessins schématiques annexés, dans lesquels :
- la figure 1 est une vue en plan et de dessus d'un flan stratifié constitué d'un papier protecteur pelable sur lequel est appliqué un film thermo-collant enduit sur sa face supérieure d'un adhésif qui retient des flocks de couleur blanche ;
- la figure 2 est une vue en plan et de dessus d'une feuille de papier pré-imprimé avec des motifs multicolores à l'envers;
- la figure 3 représente l'image à l'envers de la figure 2, et correspond au flan stratifié de la figure 1 après impression par transfert-sublimation des motifs multicolores du papier pré-imprimé de la figure 2 ;
- la figure 4 représente des motifs multicolores préselectionnés découpés dans le stratifié de la figure 3;
- la figure 5 représente les motifs de la figure 4, après pelage du papier protecteur pelable ;
- la figure 6 est une vue en plan d'un morceau de tissu sur lequel sont thermocollées les portions de film découpées et pelées de la figure 5; et
- la figure 7 est une vue en coupe du stratifié de la figure 3, sur lequel est appliqué un papier provisoire autocollant.

Suivant l'exemple particulier de réalisation représenté sur les dessins, le procédé d'impression selon l'invention consiste tout d'abord à appliquer une couche de base en matière plastique 2 formant un film thermocollant ou soudable par haute fréquence sur une face d'une feuille de papier protecteur pelable 1 (voir figure 7).

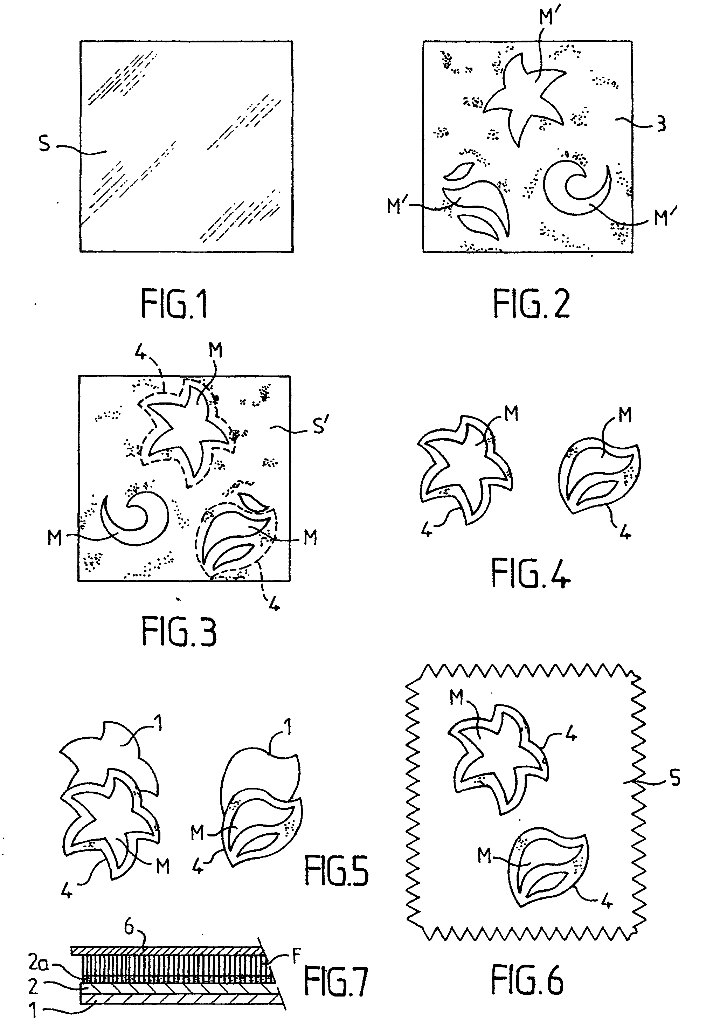

Ce film 2 est recouvert sur sa face opposée d'une couche adhésive 2a sur laquelle sont flockées des fibres ou flocks F de couleur blanche. On a indiqué en S sur la figure 1, le stratifié constitué du papier pelable 1, du film 2, de la couche adhésive 2a et des flocks F, vu du côté des fibres F.

La figure 2 montre une feuille de papier 3 pré-imprimée de motifs multicolores M' en colorants sublimables imprimés sur un support papier, par exemple au moyen d'une imprimante à jet d'encre pilotée par ordinateur (non représentés). Le papier pré-imprimé 3 est destiné à être monté par exemple sur une calandre d'impression thermique (non représentée) qui vient en contact avec les flocks F du stratifié S constitué du papier protecteur pelable 1 et du film flocké 2.

On fait alors avancer le stratifié S simultanément à la rotation de la calandre sous une pression régulière généralement inférieure à 40kPa et à une température comprise entre 180 et 230° C, pendant une durée d'environ 5 à 30 secondes. On obtient ainsi un transfert des motifs multicolores M' du papier imprimé 3 sur les flocks F par vaporisation des colorants sublimables qui viennent se fixer de façon permanente sur les fibres du film flocké. Sur la figure 3, on a indiqué en S', le stratifié obtenu après impression par transfert-sublimation. Ce procédé d'impression présente l'avantage d'imprimer en continu le film flocké qui est alimenté par exemple à partir d'un rouleau de stratifié S qui est déroulé en synchronisation avec la rotation de la calandre.

Comme on pourra le constater, le film flocké imprimé S', représenté sur la figure 3, présente des motifs imprimés M qui sont exactement l'image à l'envers des motifs pré-imprimés M' sur le papier 3 de la figure 2. Par conséquent, les motifs doivent être pré-imprimés sur le papier 3 à l'envers, pour obtenir sur le tissu à décorer un motif à l'endroit.

Dans une première variante de réalisation, on procède alors à la découpe directe et en continu de certains motifs présélectionnés 4 sur le stratifié imprimé S' de la figure 3. La découpe peut être soit une découpe mécanique à l'emporte-pièce, soit une découpe au laser, soit une découpe au jet d'eau ou à la table de découpe pilotée par ordinateur. Pour automatiser cette opération de découpe, on effectue préalablement un répérage précis des motifs à découper 4, comme indiqué par des traits interrompus sur le stratifié S' de la figure 3, par exemple au moyen d'un système de repérage optique.

Comme visible sur la figure 5, on vient ensuite peler le papier protecteur 1 pour obtenir une portion de film flocké imprimé seule 4 correspondant à un ou plusieurs motifs décoratifs découpés M. Bien entendu, le papier protecteur 1 pourrait aussi bien être pelé avant le repérage et/ou la découpe.

On vient ensuite appliquer cette portion de film flockée imprimée 4 par sa face non flockée contre un support 5, par exemple un vêtement, un article textile, ou analogue. Cette application se fait par chauffage pour coller le film thermo-collant sur le tissu à décorer, par exemple à l'aide d'une presse électrique, d'un fer à repasser ou analogue.

Dans une autre variante de réalisation, on vient appliquer par simple pression sur les flocks imprimés du stratifié S' un support provisoire 6 légèrement auto-adhésif et résistant à haute température, par exemple un film polyester enduit de résines silicones ou acryliques. Le papier protecteur 1 peut alors être retiré, et on vient découper le film flocké à partir de sa face non flockée, sans toutefois découper le support autoadhésif 6 qui se trouve sur le dessus des flocks F de la face flockée du film. La longueur des fibres facilite la découpe limitée uniquement au filin flocké.

Bien entendu, dans cette variante on peut également procéder à la découpe du film après repérage optique des motifs, par transparence à travers le film de base 2 du film flocké.

On vient ensuite décoller du support auto-adhésif 6 la partie découpée du film flocké qui ne correspond pas au(x) motif(s) séléctionné(s). Ce support provisoire autoadhésif présente l'avantage de conserver exactement les positions relatives des différents motifs sélectionnés 4, sans avoir à repositionner les motifs lors de leur application sur le tissu à décorer. En effet, les motifs sélectionnés ainsi découpés 4 sont appliqués sur le tissu à décorer 5 tout en étant portés par le support provisoire autoadhésif 6. Lors de l'application de la chaleur sur ce support provisoire, cette chaleur est transmise indirectement au film flocké, et on obtient un thermocollage du film sur le tissu sans déformation du support autoadhésif qui est prévu *pour* résister à la température de thermocollage du film.

Après thermocollage sur le tissu à décorer, on vient alors simplement décoller le support provisoire 6.

Dans le cas d'un film flocké soudable par haute fréquence, on peut effectuer simultanément les opérations de découpe et d'application des motifs sur le tissu à décorer. On utilise à cet effet une électrode soudante à la fois coupante et émettrice d'ondes haute fréquence (non représentée) pour simultanément découper les motifs sélectionnés sur le film flocké et souder la bordure de ces motifs sélectionnés sur le tissu à décorer. On peut également dans ce cas intercaler une couche de mousse en PVC entre la face non flockée du film flocké et le tissu à décorer. Bien entendu, le papier protecteur pelable aura été préalablement retiré.

On obtiendra en final, un tissu décoré par un film flocké présentant des motifs multicolores et dont les flocks présentent un toucher doux et une souplesse excellente. A cet effet, on utilise des fibres présentant un diamètre fin et une longueur relativement importante.

Bien que l'invention ait été décrite en liaison avec plusieurs modes de réalisations particuliers, il est bien évident qu'elle n'y est nullement limitée et qu'elle comprend tous les équivalents techniques des moyens décrits ainsi que leurs combinaisons, si celles-ci entrent dans le cadre de l'invention, telle que définie par les revendications suivantes.

## Revendications

1. Procédé automatique d'impression en continu de motifs multicolores sur un film flocké thermocollant ou soudable par haute fréquence, **caractérisé par le fait qu'**il consiste à
- appliquer un film thermocollant ou soudable par haute fréquence (2) sur un papier protecteur pelable (1),
- appliquer une couche adhésive (2a) sur ledit film (2),
- flocker des fibres ou flocks de couleur blanche (F) sur la couche adhésive (2a),
- préparer un papier (3) pré-imprimé de motifs multicolores (M') constitués de colorants sublimables aptes à se vaporiser et à se fixer de façon permanente sur les fibres précitées (F), ces motifs pré-imprimés (M') étant exactement l'image à l'envers des motifs (M) que l'on souhaite obtenir sur le film flocké,
- transférer par sublimation les motifs multicolores (M') du papier pré-imprimé (3) sur le stratifié (S) constitué du papier protecteur (1) et du film flocké (2) par contact sous une pression et une température déterminées.

2. Procédé selon la revendication 1, **caractérisé par le fait que** le papier protecteur pelable (1) est enduit ou recouvert par co-extrusion d'un film (2) de polymère de synthèse soudable par haute fréquence, de préférence des résines de polychlorure de vinyle, compactes ou moussées par addition d'agents gonflants chimiques ou mécaniques.

3. Procédé selon la revendication 1, **caractérisé par le fait que** le papier protecteur pelable (1) est enduit ou recouvert par co-extrusion d'un film (2) de résines de synthèse thermocollantes, de préférence des résines thermofusibles à base de copolyamides, de copolyesters, d'esters acryliques, de latex de synthèse, ou d'éthylène vinyl acétate.

4. Procédé selon l'une des revendications précédentes, **caractérisé par le fait que** les fibres (F) sont des fibres synthétiques, de préférence des fibres de polyamide, telles que des fibres de Nylon 6 ou 6-6, ou des fibres de polyester.

5. Procédé selon l'une des revendications 1 à 3, **caractérisé par le fait que** les fibres (F) sont des fibres soit naturelles, soit en rayonne à base de viscose, soit en coton, préalablement traitées pour retenir les colorants sublimés.

6. Procédé selon la revendication 4 ou 5, **caractérisé par le fait que** les fibres (F) utilisées sont des fibres de 0,5mm (0,9 DTEX) à 2mm (6 DTEX).

7. Procédé selon l'une des revendications précédentes, **caractérisé par le fait que** l'étape de transfert s'effectue au moyen d'une calandre d'impression thermique assurant une pression régulière, généralement inférieure à 40kPa, entre le papier pré-imprimé (3) et le stratifié (S), et une température comprise entre environ 180 à 230 ° C et pendant une durée approximative de 5 à 30 secondes.

8. Procédé selon l'une des revendications précédentes, **caractérisé par le fait que** le papier pré-imprimé (3) est obtenu par dépôt sur ce papier de colorants sublimables au moyen d'une imprimante à jet d'encre pilotée par ordinateur.

9. Film flocké (S') thermocollant ou soudable par haute fréquence, directement obtenu par le procédé selon l'une des revendications précédentes, **caractérisé par le fait qu'**il comporte un papier protecteur pelable (1) sur lequel est appliqué un film thermocollant ou soudable par haute-fréquence (2), ledit film étant revêtu d'une couche adhésive (2a) à laquelle adhèrent des fibres ou flocks (F) imprimés de motifs multicolores (M).

10. Procédé d'application sur un support à décorer (5), tel qu'un tissu ou tout autre support tel qu'un papier, un carton, un non-tissé ou un film plastique, du film flocké (S') selon la revendication 9, **caractérisé par le fait qu'**il consiste à:
- repérer sur le film (S') le ou les motifs imprimés préselectionnés (4) à appliquer sur le support à décorer (5),
- découper le film le long du contour des motifs ainsi repérés (4), et
- peler le papier protecteur pelable (1) avant d'appliquer par thermocollage ou soudure par haute fréquence la portion préselectionnée de film (4) ainsi découpée et pelée sur le support à décorer (5).

11. Procédé selon la revendication 10, **caractérisé par le fait qu'**il consiste :
- avant l'étape de repérage précitée, à appliquer un support provisoire (6) légèrement autoadhésif et résistant à haute température sur les flocks (F) du film flocké (S'),
- puis, à découper le film à partir de sa surface non flockée de manière à ne pas découper le support provisoire (6),
- à décoller, ensuite, du support provisoire (6) la partie découpée du film qui ne correspond pas au(x) motif(s) préselectionné(s) (4),
- à appliquer, indirectement, lesdites portions préselectionnées découpées et pelées (4) sur le support à décorer (5) par l'intermédiaire du support provisoire (6), et
- enfin, à décoller le support provisoire (6) des portions de film (4) ainsi appliquées après thermocollage ou soudure par haute fréquence de celles-ci sur le support à décorer (5).

12. Procédé d'application sur un support à décorer (5), tel qu'un tissu ou tout autre support tel qu'un papier, un carton, un non-tissé ou un film plastique, d'un film flocké (S') imprimé de motifs multicolores et soudable par haute fréquence selon la revendication 9, **caractérisé en ce qu'**il consiste à :
- peler le papier protecteur (1) du film flocké,
- repérer sur le film flocké les motifs préselectionnés (4) à appliquer, et
- effectuer simultanément avec la même électrode les opérations de découpe et de soudure par haute fréquence de la partie ainsi repérée (4) du film flocké sur le support à décorer (5).

13. Procédé de la revendication 12, **caractérisé par le fait qu'**il consiste à intercaler entre la face non flockée du film flocké et le support à décorer (5), une couche de mousse.

14. Support décoré tel qu'un tissu (5) ou tout autre support tel qu'un papier, un carton, un non-tissé ou un film plastique, directement obtenu par le procédé selon l'une des revendications 10 à 13, **caractérisé par le fait qu'**il comporte un support sur lequel est thermocollée ou soudée la portion de film thermocollant ou soudable par haute fréquence (2) des motifs imprimés présélectionnés et découpés (4).

## Patentansprüche

1. Verfahren zum automatischen Endlosdruck von mehrfarbigen Motiven auf eine warmklebende oder hochfrequenzaufschweißbare Flockfolie, **dadurch gekennzeichnet, dass** dieses Verfahren besteht aus:
- Aufbringen einer warmklebenden oder hochfrequenzaufschweißbaren Folie (2) auf einem abziehbaren Schutzpapier (1),
- Aufbringen einer Klebeschicht (2a) auf dieser Folie (2),
- Aufflocken von Fasern oder Flocken (F) von weißer Farbe auf dieser Klebeschicht (2a),
- Vorbereiten eines Papiers (3), das mit mehrfarbigen Motiven (M') vorbedruckt ist, bestehend aus sublimierbaren Farbstoffen, die in der Lage sind zu verdampfen und sich dauerhaft auf den genannten Fasern (F) festsetzen, wobei diese vorab aufgedruckten Motive (M') das exakte seitenverkehrte Abbild der Motive (M) sind, die auf der Flockfolie erscheinen sollen,
- Übertragen der mehrfarbigen Motive (M') des vorbedruckten Papiers (3) durch Sublimierung auf das aus einem Schutzpapier (1) und der Flockfolie (2) bestehende Laminat (S), unter einem bestimmten Druck bei einer bestimmten Temperatur durch Kontakt.

2. Verfahren entsprechend Anspruch 1,
**dadurch gekennzeichnet, dass** das abziehbare Schutzpapier (1) durch Koextrudieren einer hochfrequenzaufschweißbaren Synthetikpolymerfolie (2) beschichtet oder bedeckt ist, vorzugsweise aus kompakten oder durch Zugabe von chemischen oder mechanischen Aufquellmitteln aufgeschäumten Polyvinylchloridharzen.

3. Verfahren entsprechend Anspruch 1,
**dadurch gekennzeichnet, dass** das abziehbare Schutzpapier (1) durch Koextrudieren einer warmklebenden Synthetikharzfolie (2) beschichtet oder bedeckt ist, vorzugsweise aus warmschmelzenden Harzen auf der Basis von Kopolyamiden, Kopolyestern, Acrylestern, Synthetiklatex oder Ethylen-Vinylacetat.

4. Verfahren entsprechend einem der vorhergehenden Ansprüche,
**dadurch gekennzeichnet, dass** die Fasern (F) Synthetikfasern sind, vorzugsweise Polyamidfasern wie Nylonfasern 6 oder 6-6 oder Polyesterfasern.

5. Verfahren entsprechend einem der Ansprüche 1 bis 3,
**dadurch gekennzeichnet, dass** die Fasern (F) Naturfasern sind, entweder aus Reyon auf der Basis von Viskose oder aus Baumwolle, vorab behandelt zur Aufnahme der sublimierten Farbstoffe.

6. Verfahren entsprechend einem der Ansprüche 4 oder 5,
**dadurch gekennzeichnet, dass** die verwendeten Fasern (F) 0,5 mm-Fasern (0,9 DTEX) bis 2 mm-Fasern (6 DTEX) sind.

7. Verfahren entsprechend einem der vorhergehenden Ansprüche,
**dadurch gekennzeichnet, dass** das Übertragen mit Hilfe einer Wärmedruckmangel, die einen gleichmäßigen Druck, der im allgemeinen kleiner als 40kPa ist, zwischen dem vorbedruckten Papier (3) und dem Laminat (S) sicherstellt, bei einer Temperatur zwischen ungefähr 180 bis 230°C über eine ungefähre Dauer von 5 bis 30 Sekunden stattfindet.

8. Verfahren entsprechend einem der vorhergehenden Ansprüche,
**dadurch gekennzeichnet, dass** das vorbedruckte Papier (3) dadurch erhalten wird, dass auf diesem Papier sublimierbare Farbstoffe mit Hilfe eines computergesteuerten Tintenstrahldruckers aufgebracht werden.

9. Warmklebende oder hochfrequenzaufschweißbare Flockfolie (S'), die direkt durch das Verfahren entsprechend einem der vorhergehenden Ansprüche erhalten wurde,
**dadurch gekennzeichnet, dass** sie ein abziehbares Schutzpapier (1) umfasst, auf dem eine warmklebende oder hochfrequenzaufschweißbare Folie (2) aufgebracht wurde, wobei diese Folie mit einer Klebeschicht (2a) bedeckt ist, auf der mit mehrfarbigen Motiven (M) bedruckte Fasern oder Flocken (F) haften.

10. Verfahren zum Aufbringen einer Flockfolie (S') gemäß Anspruch 9 auf einem zu dekorierenden Träger (5) wie einem Stoff oder jedem beliebigen Träger wie ein Papier, ein Karton, ein Vlies oder eine Plastikfolie,
**dadurch gekennzeichnet, dass** dieses Verfahren darin besteht,
- auf der Folie (S') das oder die vorab ausgewählten Druckmotive (4) zu bestimmen, die auf dem zu gestaltenden Träger (5) aufzubringen sind,
- die Folie entlang der Konturen der so bestimmten Motive (4) zu schneiden und
- das abziehbare Schutzpapier (1) abzuziehen, bevor der auf diese Weise geschnittene und abgezogene, vorab ausgewählte Teil der Folie (4) durch Warmkleben oder durch Hochfrequenzschweißen auf dem zu dekorierenden Träger (5) aufgebracht wird.

11. Verfahren entsprechend Anspruch 10,
**dadurch gekennzeichnet, dass** es daraus besteht,
- vor der vorgenannten Bestimmungsphase auf den Flocken (F) des Flockfilms (S') einen provisorischen Träger (6) aufzubringen, der leicht selbstklebend und hochtemperaturbeständig ist,
- dann den Film ausgehend von seiner nicht geflockten Seite zu schneiden, in der Weise, dass der provisorische Träger (6) nicht geschnitten wird,
- vom provisorischen Träger (6) den geschnittenen Folienteil abzulösen, der nicht dem/n vorab ausgewählten Motive/n (4) entspricht,
- diese geschnittenen und abgelösten, vorab ausgewählten Teile (4) indirekt auf dem zu gestaltenden Träger (5) mit Hilfe des provisorischen Trägers (6) aufzubringen und
- schließlich den provisorischen Träger (6) von den so aufgebrachten Folienteilen (4) abzulösen, nachdem diese auf dem zu dekorierenden Träger (5) im Warmklebeverfahren oder durch Hochfrequenzschweißen aufgebracht wurden.

12. Verfahren zum Aufbringen einer Flockfolie (S'), die mit mehrfarbigen Motiven bedruckt und hochfrequenzaufschweißbar ist entsprechend Anspruch 9, auf einem zu gestaltenden Träger (5) wie einem Stoff oder jedem beliebigen Träger wie ein Papier, ein Karton, ein Vlies oder eine Plastikfolie,
**dadurch gekennzeichnet, dass** dieses Verfahren darin besteht,
- das Schutzpapier (1) von der Flockfolie abzuziehen,
- auf der Flockfolie die aufzubringenden, vorab ausgewählten Motive (4) zu bestimmen und
- gleichzeitig mit derselben Elektrode den so bestimmten Teil (4) der Flockfolie zu schneiden und auf dem zu gestaltenden Träger (5) hochfrequenzaufzuschweißen.

13. Verfahren entsprechend Anspruch 12,
**dadurch gekennzeichnet, dass** es darin besteht, dass zwischen der nicht geflockten Seite der Flockfolie und dem zu gestaltenden Träger (5) eine Schaumschicht eingebracht wird.

14. Ein dekorierter Träger wie ein Stoff (5) oder jeder beliebige Träger wie ein Papier, ein Karton, ein Vlies oder eine Plastikfolie, direkt erhalten durch das Verfahren entsprechend einem der Ansprüche 10 bis 13,
**dadurch gekennzeichnet, dass** er einen Träger umfasst, auf dem der Teil der warmklebenden oder hochfrequenzaufschweißbaren Folie (2) mit den vorab ausgewählten und geschnittenen Druckmotiven (4) im Warmklebeverfahren oder durch Hochfrequenzschweißen aufgebracht ist.

## Claims

1. Continuous automatic process for printing multicoloured designs on a flocked film which is thermo-adhesive or weldable by high frequency, **characterised in that** the said process consists in:
- applying a film (2) which is thermo-adhesive or weldable by high frequency to a protective paper (1) that can be peeled off,
- applying an adhesive layer (2a) to the said film (2),
- flocking white-coloured fibres or flocks (F) onto the adhesive layer (2a),
- preparing a paper (3) pre-printed with multicoloured designs (M') that consist of sublimable colorants that can vaporise and become permanently fixed to the aforesaid fibres (F), the said pre-printed designs (M') being exactly the inverse of the designs (M) which it is desired to obtain on the flocked film,
- transferring the multicoloured designs (M') from the pre-printed paper (3) to the layered structure (S) consisting of the protective paper (1) and the flocked film (2) by contact under a determined pressure and at a determined temperature.

2. Process according to Claim 1, **characterised in that** the peel-off protective paper (1) is coated or covered by co-extrusion with a film (2) of synthetic polymer which is thermo-adhesive or weldable by high frequency, preferably comprising polyvinyl chloride resins that are compact or foamed by the addition of chemical or mechanical expanding agents.

3. Process according to Claim 1, **characterised in that** the peel-off protective paper (1) is coated or covered by co-extrusion of a film (2) of synthetic resins that are thermo-adhesive, preferably thermally fusible resins based on copolyamides, copolyesters, acrylic esters, synthetic latex or ethylene vinyl acetate.

4. Process according to any of the preceding claims, **characterised in that** the fibre (F) are synthetic fibres, preferably polyamide fibres such as fibres of Nylon 6 or 6-6, or polyester fibres.

5. Process according to any of Claims 1 to 3, **characterised in that** the fibres (F) are either natural fibres, or rayon fibres based on viscose, or cotton fibres, which have been previously treated to retain the colorants.

6. Process according to Claims 4 or 5, **characterised in that** the fibres (F) used are fibres of gauge 0.5 mm (0.9 DTEX) to 2 mm (6 DTEX).

7. Process according to any of the preceding claims, **characterised in that** the transfer phase is effected by means of a thermal printing roller which exerts: a uniform pressure, generally lower than 40 kPa, between the pre-printed paper (3) and the layered structure (S), and produces a temperature between about 180° and 230°C for a time of approximately 5 to 30 seconds.

8. Process according to any of the preceding claims, **characterised in that** the pre-printed paper (3) is obtained by deposition onto the said paper of sublimable colorants by means of a computer-controlled ink-jet printer.

9. Flocked film (S') that is thermo-adhesive or weldable by high frequency, obtained directly by the process according to any of the preceding claims, **characterised in that** it comprises a peel-off protective paper (1) onto which is applied a film (2) which is thermo-adhesive or weldable by high frequency, the said film being coated with an adhesive layer (2a) to which fibres or flocks (F) printed with multicoloured designs (M) are stuck.

10. Process for applying the flocked film (S') according to Claim 9 onto a support (5) to be decorated, such as a woven fabric or any other support such as paper, cardboard, non-woven fabric or plastic film, **characterised in that** it consists in:
- marking on the film (S') the preselected design or designs (4) to be applied to the support (5) to be decorated,
- cutting the film along the contours of the designs (4) so marked, and
- peeling off the peel-off protective paper (1) before applying the preselected portion(s) of film (4) thus cut out and peeled, by thermo-adhesion or by high-frequency welding, onto the support (5) to be decorated.

11. Process according to Claim 10, **characterised in that** it consists in:
- before the aforesaid marking stage, applying a slightly self-adhesive and high-temperature-resistant temporary support (6) over the flocks (F) or the flocked film (S'),
- then cutting the film on the side of its non-flocked surface in such manner as not to cut through the temporary support (6),
- then, detaching from the temporary support (6) the cut portion of the film that does not correspond to the preselected design(s) (4),
- applying indirectly the said cut out preselected and peeled portions (4) onto the support (5) to be decorated using the temporary support (6) as intermediary, and
- finally, detaching the temporary support (6) from the portion(s) of film (4) so applied, once the latter has/have been thermo-adhesively attached or high-frequency welded to the support (5) to be decorated.

12. Process for the application onto a support (5) to be decorated, such as a woven fabric or any other support such as paper, cardboard, non-woven fabric or plastic film, of a flocked film (S') printed with multicoloured designs and weldable by high frequency according to Claim 9, **characterised in that** it consists in:
- peeling the protective paper (1) off the flocked film,
- marking on the flocked film the preselected designs (4) to be applied,
- using the same electrode to carry out simultaneously the operations of cutting out the portion(s) (4) thus marked and welding it/them by high frequency to the support (5) to be decorated.

13. Process according to Claim 12, **characterised in that** it consists in interposing a layer of foam between the unflocked face of the flocked film and the support (5) to be decorated.

14. Decorated support (5) such as a woven fabric or any other support such as paper, cardboard, non-woven fabric or plastic film, obtained directly by the process according to any of Claims 10 to 13, **characterised in that** it comprises a support onto which is attached or welded the portions) (4) of the thermo-adhesive or high-frequency-weldable film (2) that has/have been printed with preselected designs and cut out.
